# EUROPEAN PATENT APPLICATION

(11) **EP 4 580 146 A1**
(43) Date of publication of application: **02.07.2025**
(21) Application number: 23857623.5
(22) Date of filing: 10.08.2023
(51) Int. Cl.: H04L 41/0893, H04W 24/02, H04W 8/02, H04L 67/30

(54) **METHOD AND DEVICE FOR CONFIGURING NETWORK SLICE IN WIRELESS COMMUNICATION SYSTEM**

(30) Priority: 26.08.2022 KR 20220107714; 13.12.2022 KR 20220173501
(71) Applicant: Samsung Electronics Co., Ltd., Suwon-si, Gyeonggi-do 16677 (KR)
(72) Inventor: HYUN, Dowon, Suwon-si, Gyeonggi-do 16677 (KR); KWON, Taeseong, Suwon-si, Gyeonggi-do 16677 (KR); SONG, Bohyun, Suwon-si, Gyeonggi-do 16677 (KR)
(74) Representative: HGF
(86) International application number: PCT/KR2023/011873
(87) International publication number: WO 2024/043589

(57) **Abstract**

The present disclosure relates to a 5G or 6G communication system for supporting higher data transmission rates. According to various embodiments of the present disclosure, a method performed by a network slice subnet management function (NSSMF) node in a wireless communication system may comprise the steps of: receiving a request message including a tracking area code (TAC) list for network slice generation from a network slice management function (NSMF) node, wherein the TAC list corresponds to information on a specific area related to network slice generation; determining at least one TAC corresponding to a TAC supported by the NSSMF node among TACs included in the TAC list; and transmitting, to the NSMF node, a response message including information on the determined at least one TAC.

## Description

### [Technical Field]

The disclosure relates to a method and a device for supporting configuration of a network slice in a wireless communication system.

Specifically, the disclosure relates to a method and a device for configuring a network slice independently of synchronization of information between a network slice management function (NSMF) and a network slice subnet management function (NSSMF) in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As described above, with the development of wireless communication systems, in connection with the generation of a network slice that provides a dedicated network specialized for a specific service, a scheme is required in which a network slice management function (NSMF) of configuring a network slice is able to configure a network slice without synchronizing specific information of individual network slice subnet management functions (NSSMFs). In particular, a method is required in which the NSMF is able to configure a network slice service without information about a tracking area code (TAC) included in each NSSMF or an identification process (e.g., synchronization) of such information.

### [Disclosure of Invention]

### [Technical Problem]

Based on the discussion described above, the disclosure is to provide a device and a method capable of providing smooth service efficiency in a wireless communication system.

In addition, the disclosure provides a device and a method in which a network slice management function (NSMF) configures a network slice service in a wireless communication system without information about a tracking area code (TAC) included in each network slice subnet management function (NSSMF) or an identification process (e.g., synchronization) of such information.

### [Solution to Problem]

According to various embodiments of the disclosure, a method performed by a network slice subnet management function (NSSMF) node in a wireless communication system may include receiving a request message including a tracking area code (TAC) list for network slice generation from a network slice management function (NSMF) node, wherein the TAC list corresponds to information on a specific area related to network slice generation, determining at least one TAC corresponding to a TAC supported by the NSSMF node from among TACs included in the TAC list, and transmitting, to the NSMF node, a response message including information on the determined at least one TAC.

According to various embodiments of the disclosure, a method performed by a network slice management function (NSMF) node in a wireless communication system may include transmitting a request message including a tracking area code (TAC) list for network slice generation to a network slice management function (NSMF) node, wherein the TAC list corresponds to information on a specific area related to the network slice generation, receiving, from the NSSMF, a response message including information on at least one TAC corresponding to a TAC supported by the NSSMF node among TACs included in the TAC list, and generating a network slice based on information on the at least one TAC.

According to various embodiments of the disclosure, a network slice subnet management function (NSSMF) node in a wireless communication system may include at least one transceiver, and at least one processor functionally coupled to the at least one transceiver, wherein the at least one processor is configured to receive a request message including a tracking area code (TAC) list for network slice generation from a network slice management function (NSMF) node, wherein the TAC list corresponds to information on a specific area related to network slice generation, determine at least one TAC corresponding to a TAC supported by the NSSMF node from among TACs included in the TAC list, and transmit, to the NSMF node, a response message including information on the determined at least one TAC.

According to various embodiments of the disclosure, a network slice management function (NSMF) node in a wireless communication system may include at least one transceiver, and at least one processor functionally coupled to the at least one transceiver, wherein the at least one processor is configured to transmit a request message including a tracking area code (TAC) list for network slice generation to a network slice management function (NSMF) node, wherein the TAC list corresponds to information on a specific area related to the network slice generation, receive, from the NSSMF, a response message including information on at least one TAC corresponding to a TAC supported by the NSSMF node among TACs included in the TAC list, and generate a network slice based on information on the at least one TAC.

### [Advantageous Effects of Invention]

Various embodiments of the disclosure can provide a device and a method capable of effectively providing services in a wireless communication system.

Advantageous effects obtainable from the disclosure may not be limited to the above-mentioned effects, and other effects which are not mentioned may be clearly understood from the following descriptions by those skilled in the art to which the disclosure pertains.

### [Brief Description of Drawings]

FIG. 1 illustrates a communication network including core network entities in a wireless communication system according to various embodiments of the disclosure;
FIG. 2A illustrates a wireless environment including a core network in a wireless communication system according to various embodiments of the disclosure;
FIG. 2B illustrates the configuration of a core network object in a wireless communication system according to various embodiments of the disclosure;
FIG. 2C illustrates the configuration of a UE in a wireless communication system according to various embodiments of the disclosure;
FIG. 3 illustrates transmission of profile information for network slice configuration according to various embodiments of the disclosure;
FIG. 4 illustrates an example of a tracking area code (TAC) for a service profile according to various embodiments of the disclosure;
FIG. 5A illustrates an example of a structure for network slice configuration for allocating an individual TAC list based on a TAC supported by an NSSMF according to various embodiments of the disclosure;
FIG. 5B illustrates an example of a structure for network slice configuration by which an NSSMF allocates a TAC list based on area information configured according to various embodiments of the disclosure;
FIG. 6 illustrates a signal flow for network slice configuration according to various embodiments of the disclosure;
FIG. 7 illustrates another signal flow for network slice configuration according to various embodiments of the disclosure;
FIG. 8 illustrates an operation flow of a network slice subnet management function (NSSMF) for network slice configuration according to various embodiments of the disclosure; and
FIG. 9 illustrates an operation flow of a network slice management function (NSMF) for network slice configuration according to various embodiments of the disclosure.

### [Mode for the Invention]

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

In the following description, terms referring to signals, terms referring to channels, terms referring to control information, terms referring to network entities, terms referring to device elements, and the like are illustratively used for the sake of descriptive convenience. Therefore, the disclosure is not limited by the terms as described below, and other terms referring to subjects having equivalent technical meanings may be used.

Furthermore, various embodiments of the disclosure will be described using terms used in some communication standards (e.g., the 3rd generation partnership project (3GPP)), but they are for illustrative purposes only. Various embodiments of the disclosure may be easily applied to other communication systems through modifications.

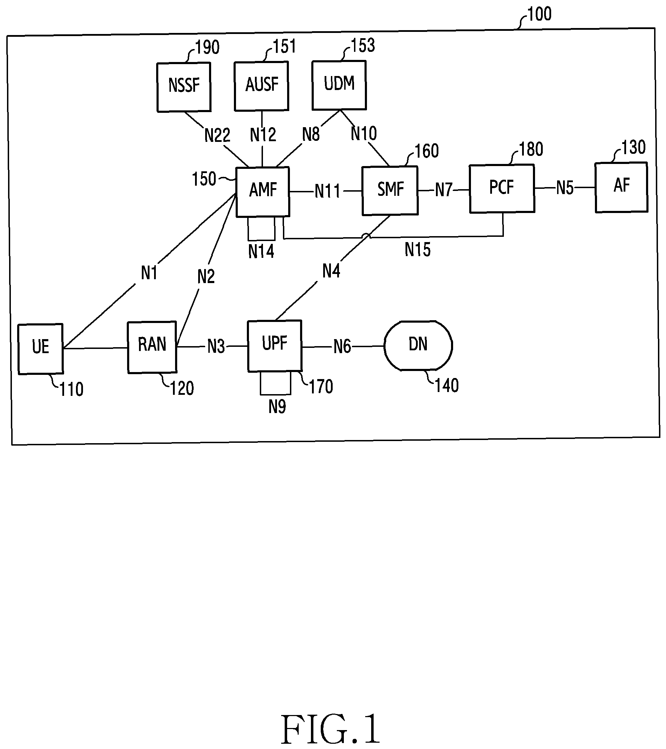

FIG. 1 illustrates a communication network including core network entities in a wireless communication system according to various embodiments of the disclosure. A 5G mobile communication network may include a 5G user equipment (UE) 110, a 5G radio access network (RAN) 120, and a 5G core network.

The 5G core network may include network functions including an access and mobility management function (AMF) 150 that provides a mobility management function for the UE, a session management function (SMF) 160 that provides a session management function, a user plane function (UPF) 170 that performs a data transfer role, a policy control function (PCF) 180 that provides a policy control function, a unified data management (UDM) 153 that provides a function of managing data, such as subscriber data and policy control data, or a unified data repository (UDR) that stores data of various network functions. Although not shown in FIG. 1, the 5G core network may further include a communication service management function (CSMF), a network slice management function (NSMF), and a network slice subnet management function (NSSMF) for network slice generation and user service identification.

Referring to FIG. 1, a user equipment (UE) 110 may perform communication through a wireless channel, that is, an access network, which is established between the UE and a base station (e.g., eNB or gNB). In some embodiments, the UE 110 is a device used by a user, and may be configured to provide a user interface (UI). For example, the UE 110 may be a terminal equipped in a vehicle for driving. In some embodiments, the UE 110 may be a device of performing machine type communication (MTC) operated without the user's involvement, or an autonomous vehicle. The UE may be referred to as an electronic device, "a terminal", "a vehicle terminal", "a mobile station, "a subscriber station", "a remote terminal", "a wireless terminal", "a user device", or other terms having a technical meaning equivalent thereto. A customer-premises equipment (CPE) or a dongle type terminal may be used as well as a UE. The CPE may be connected to a NG-RAN node similar to a UE, and provide a network to other communication equipment (e.g., a laptop).

Referring to FIG. 1, the AMF 150 may provide a function for access and mobility management in a unit of the UE 110, and one UE 110 is fundamentally connected to one AMF 150. Specifically, the AMF 150 may perform at least one function among signaling between core network nodes for mobility between 3GPP access networks, an interface (N2 interface) between radio access networks (e.g., 5G RAN) 120, NAS signaling with the UE 110, identification of the SMF 160, and provision of transport of a session management (SM) message between the UE 110 and the SMF 160. Some or all functions of the AMF 150 may be supported in a single instance of one AMF 150.

Referring to FIG. 1, the SMF 160 may provide a session management function, and when the UE 110 has multiple sessions, the sessions may be managed by different SMFs 160. Specifically, the SMF 160 may perform at least one function among session management (e.g., session establishment, modification, and cancellation including tunnel maintenance between the UPF 170 and an access network node), selection and control of a user plane (UP) function, configuration of traffic steering for routing traffic from the UPE 170 to a proper destination, termination of an SM part of aNAS message, downlink data notification (DDN), and an initiator of AN-specific SM information (e.g., transfer to the access network through N2 interface via the AMF 150). Some or all functions of the SMF 160 may be supported in a single instance of one SMF 160.

In 3GPP systems, conceptual links connecting NFs in the 5G system may be referred to as "reference points". The reference points may also be referred to as "interfaces". In the following, reference points included in the 5G system architecture described throughout FIG. 1 to FIG. 12 are exemplified below.
- N1: a reference point between a UE 110 and an AMF 150
- N2: a reference point between an (R)AN 120 and an AMF 150
- N3: a reference point between an (R)AN 120 and a UPF 170
- N4: a reference point between an SMF 160and a UPF 170
- N5: a reference point between a PCF 180 and an AF 130
- N6: a reference point between a UPF 170 and a DN 140
- N7: a reference point between an SMF 160 and a PCF 180
- N8: a reference point between a UDM 153 and an AMF 150
- N9: a reference point between two core UPFs 170
- N10: a reference point between a UDM 153 and an SMF 160
- N11: a reference point between an AMF 150 and an SMF 160
- N12: a reference point between an AMF 150 and an authentication server function (AUSF) 151
- N13: a reference point between a UDM 153 and an AUSF 151
- N14: a reference point between two AMFs 150
- N15: a reference point between a PCF 180 and an AMF 150 for a non-roaming scenario, and a reference point between a PCF 180 in a visited network and an AMF 150 for a roaming scenario

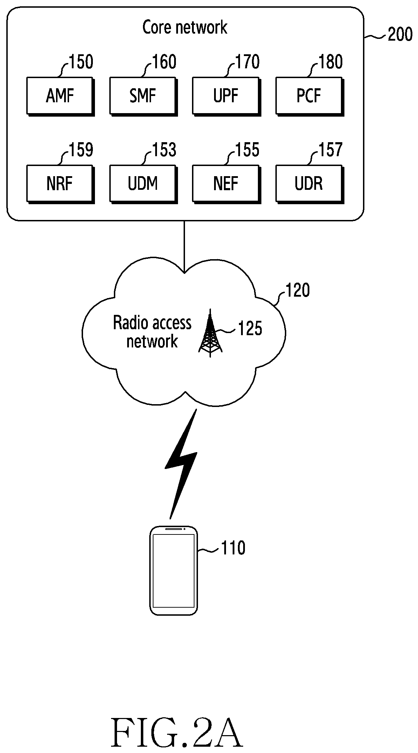

FIG. 2A illustrates a wireless environment including a core network 200 in a wireless communication system according to an embodiment.

Referring to FIG. 2A, a wireless communication system may include a radio access network (RAN) 120 and a core network (CN) 200.

The RAN 120 is a network directly connected to a user device, for example, the UE 110, and is an infrastructure that provides wireless access to the UE 110. The RAN 120 includes a set of multiple base stations including a base station 125, and the multiple base stations may perform communication through interfaces established therebetween. At least some of the interfaces between the multiple base stations may be wired or wireless. The base station 125 may have a structure in which a central unit (CU) and a distributed unit (DU) are separated from each other. In this case, one CU may control multiple DUs. The base station 125 may be referred to, in addition to the base station, as "an access point (AP)", "a gNB (next generation node B)", "a 5th generation node (5G node)", "a wireless point", "a transmission/reception point (TRP)", or other terms having a technical meaning equivalent thereto. The UE 110 may access the RAN 120 and communicate with the base station 125 through a wireless channel. The UE 110 may be referred to, in addition to a terminal, as "a user equipment (UE)", "a mobile station, "a subscriber station", "a remote terminal", "a wireless terminal", "a user device", or other terms having a technical meaning equivalent thereto.

The CN 200 is a network of managing the entire system, and controls the RAN 120 and processes data and control signals for the UE 110 which is transmitted or received via the RAN 120. The CN 200 may perform various functions including control of a user plane and a control plane, processing of mobility, management of subscriber information, charging, and linkage with a different type of system (e.g., long-term evolution (LTE) system). In order to perform the various functions, the CN 200 may include multiple entities that have different NFs and are functionally separated from each other. For example, the CN 200 may include the access and mobility management function (AMF) 150, the session management function (SMF) 160, the user plane function (UPF) 170, the policy and charging function (PCF) 180, a network repository function (NRF) 159, the user data management (UDM) 153, a network exposure function (NEF) 155, and a unified data repository (UDR) 157. Although not shown in FIG. 2A, the core network 200 may further include a communication service management function (CSMF), a network slice management function (NSMF), and a network slice subnet management function (NSSMF) for network slice generation and user service identification.

The UE 110 may be connected to the RAN 120 to access the AMF 150 that performs a mobility management function for the CN 200. The AMF 150 is a device or a function that serves both access to the RAN 120 and mobility management for the UE 110. The SMF 160 is an NF that manages a session. The AMF 150 is connected to the SMF 160, and routes a session-related message for the UE 110 to the SMF 160. The SMF 160 may connect to the UPF 170 to allocate a user plane resource to be provided to the UE 110, and establish a tunnel between the base station 125 and the UPF 170 for data transmission. The PCF 180 controls information related to charging and a policy for a session used by the UE 110. The NRF 159 stores information on NFs installed in a mobile communication service provider network, and notifies of the stored information. The NRF 159 may be connected to all NFs. Each NF registers itself in the NRF 159 when starting to be operated by the service provider network, thereby notifying the NRF 159 that the NF is being operated in the network. The UDM 153 is an NF that performs a role similar to that of a home subscriber server (HSS) of a 4G network, and stores subscription information of the UE 110 or context used by the UE 110 in the network.

The NEF 155 performs a role of connecting a 3rd party server to an NF in a 5G mobile communication system. Further, the NEF 155 provides data to the UDR 157, and updates data in or obtains data. The UDR 157 stores subscription information of the UE 110, policy information, data exposed to the outside, or information required for a 3rd party application. The UDR 157 also provides stored data to another NF.

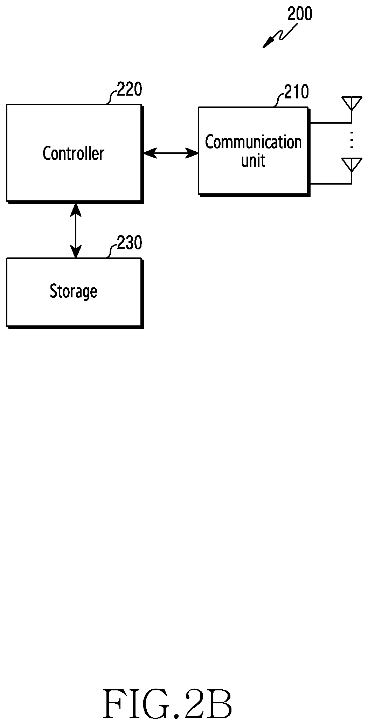

FIG. 2B illustrates the configuration of a core network object in a wireless communication system according to various embodiments of the disclosure. A configuration 200 illustrated in FIG. 2B may be understood as a configuration of a device having at least one function among the entities (including CSMF (not shown), the NSMF (not shown), and NSSMF (not shown)) in the core network of FIG. 1. Terms such as "... unit" and "...er/or" used hereinafter refer to a unit that processes at least one function or operation, which may be implemented through hardware, software, or a combination of hardware and software.

Referring to FIG. 2B, the core network object includes a communication unit 210, a storage 230, and a controller 220.

The communication unit 210 provides an interface for communicating with other devices in a network. That is, the communication unit 210 converts a bit string transmitted from a core network object to another device into a physical signal, and converts the physical signal received from the other device into a bit string. That is, the communication unit 210 may transmit and receive signals. Accordingly, the communication unit 210 may be referred to as a modem, a transmitter, a receiver, or a transceiver. At this time, the communication unit 210 allows the core network object to communicate with other devices or systems through a backhaul connection (e.g., wired backhaul or wireless backhaul) or a network.

The storage 230 stores data such as basic programs, applications, and configuration information for the operation of the core network object. The storage 230 may be configured by volatile memory, non-volatile memory, or a combination of volatile memory and non-volatile memory. In addition, the storage 230 provides stored data according to the request of the controller 220.

The controller 220 controls overall operations of the core network object. For example, the controller 220 transmits and receives signals through the communication unit 210. In addition, the controller 220 records and reads data in and from the storage 230. To this end, the controller 220 may include at least one processor. According to various embodiments of the disclosure, the controller 220 may control to perform synchronization using a wireless communication network. For example, the controller 220 may control the core network object to perform operations according to various embodiments described later.

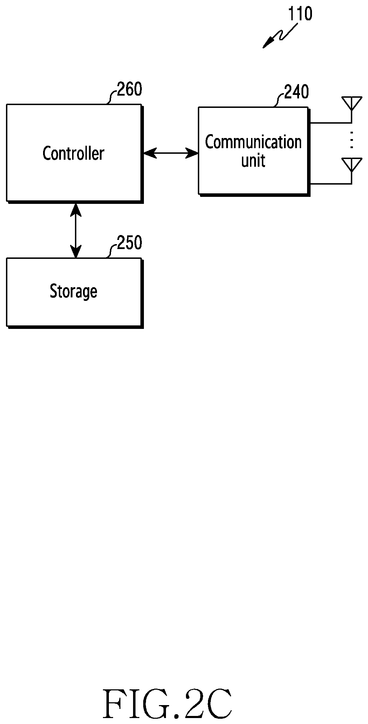

FIG. 2C shows the configuration of a UE in a wireless communication system according to various embodiments of the disclosure. The configuration illustrated in FIG. 2C may be understood as the configuration of the UE 110. Terms such as "... unit" and "... er/or" used hereinafter refer to a unit that processes at least one function or operation, which may be implemented through hardware, software, or a combination of hardware and software.

Referring to FIG. 2C, the UE includes a communication unit 240, a storage 250, and a controller 260.

The communication unit 240 performs functions for transmitting and receiving signals through a wireless channel. For example, the communication unit 240 performs a conversion function between a baseband signal and a bit string according to the physical layer standard of the system. For example, when transmitting data, the communication unit 240 generates complex symbols by encoding and modulating a transmission bit string. In addition, when receiving data, the communication unit 240 reconstructs the received bit stream by demodulating and decoding the baseband signal. In addition, the communication unit 240 upconverts the baseband signal into an RF band signal and transmits the same through an antenna, and down-converts the RF band signal received through the antenna into a baseband signal. For example, the communication unit 240 may include a transmission filter, a reception filter, an amplifier, a mixer, an oscillator, a DAC, an ADC, etc.

In addition, the communication unit 240 may include multiple transmission and reception paths. Furthermore, the communication unit 240 may include at least one antenna array configured by multiple antenna elements. In terms of hardware, the communication unit 240 may be configured by a digital circuit and an analog circuit (e.g., radio frequency integrated circuit (RFIC)). Here, the digital circuit and analog circuit may be implemented in one package. In addition, the communication unit 240 may include multiple RF chains. Furthermore, the communication unit 240 may perform beamforming.

The communication unit 240 transmits and receives signals as described above. Accordingly, all or part of the communication unit 240 may be referred to as "a transmitter", "a receiver", or "a transceiver". In addition, in the following description, transmission and reception performed through a wireless channel are used to mean that the processing as described above is performed by the communication unit 240.

The storage 250 stores data such as basic programs, applications, and configuration information for operation of the UE. The storage 250 may be configured by volatile memory, non-volatile memory, or a combination of volatile memory and non-volatile memory. In addition, the storage 250 provides stored data according to the request of the controller 260.

The controller 260 controls the overall operations of the UE. For example, the controller 260 transmits and receives signals through the communication unit 240. In addition, the controller 260 records and reads data in and from the storage 250. In addition, the controller 260 may perform protocol stack functions required by communication standards. To this end, the controller 260 may include at least one processor or microprocessor, or may be part of a processor. In addition, a portion of the communication unit 240 and the controller 260 may be referred to as a communication processor (CP). According to various embodiments, the controller 260 may control synchronization using a wireless communication network. For example, the controller 260 may control the UE to perform operations according to various embodiments described later.

In the following description, terms used to identify an access node, terms referring to network entities, terms referring to messages, terms referring to an interface between network objects, terms referring to various types of identification information, etc. are provided as examples for convenience of explanation. Accordingly, the disclosure is not limited to the terms described below, and other terms referring to objects having equivalent technical meaning may be used.

For convenience of explanation below, this disclosure uses terms and names defined in the 5G system (5GS) and new radio (NR) standards, which are the most recent standards defined by the 3GPP organization among currently existing communication standards. However, the disclosure is not limited by the above terms and names, and may be equally applied to wireless communication networks complying with other standards. In particular, the disclosure may be applied to 3GPP 5th generation mobile communication standards (e.g., 5GS and NR).

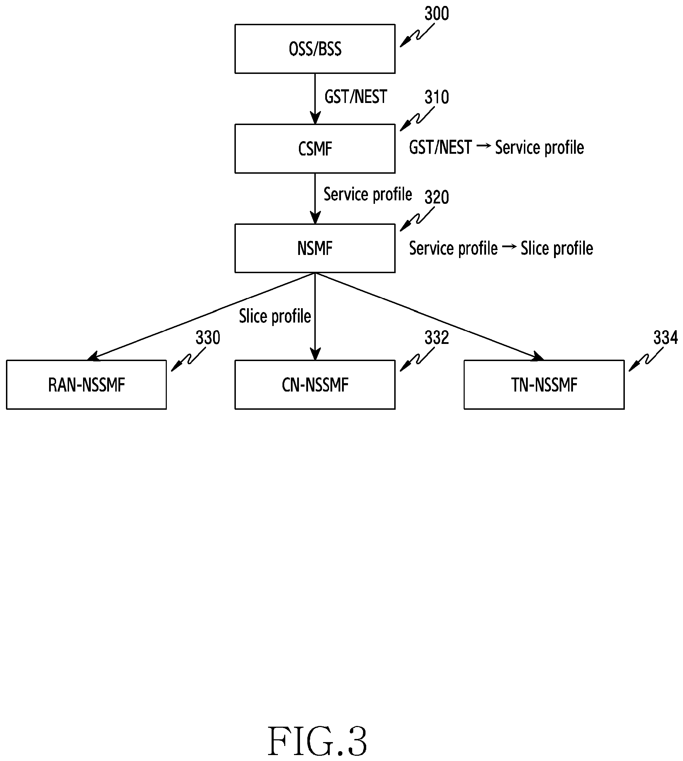

FIG. 3 illustrates transmission of profile information for network slice configuration according to various embodiments of the disclosure. Specifically, FIG. 3 shows a structure including entities that transmit and receive user service requirements in order to generate a network slice for each specific service.

According to various embodiments of the disclosure, network slicing may include a virtualized layer applied to a wireless network service. Just as a server in the cloud or a container is not a simple physical server, but includes a virtual structure, a network may also form its own logical network within a single large physical network through automated bandwidth allocation, QoS rules, and other network functions, and this network may be implemented through network slicing technology. Therefore, each network slice includes a separate network to meet various requirements requested by a specific application (e.g., user), and an appropriate management method for service requirements is required.

In order to configure a 5G network slice, service requirements (e.g., including user requirements, slice requirements, etc.) may generally be provided through operations support systems/business support systems (OSS/BSS) 300. Service requirements provided by the OSS/BSS 300 may include performance requirements and non-performance requirements for requesting services defined by global system for mobile communication (GSM). Service requirements provided by the OSS/BSS 300 may be transferred to an NSSMF 330, which manages a specific domain, through a CSMF 310 and an NSMF 320.

Specifically, the CSMF 310 and the NSMF 320 may map service requirements provided from OSS/BSS to a service level agreement (SLA) and distribute them for each domain. For example, the CSMF 310 and NSMF 320, which have received requirements for a 4k-class high-definition video transmission service, may map the requirements to an SLA. The result of mapping to the SLA may be as shown in Table 1 below. However, the result of mapping to the SLA of Table 1 is only an example and is not limited thereto, and may include various services and requirements.

**[Table 1]**

| **SLA mapping result** | |
|---|---|
| Total Throughput | 100Gbps |
| Downlink ((DL) UE Throughput) | 20Mbps |
| Latency | 50ms |
| Service Area | Seoul |
| ... | ... |

The CSMF 310 and the NSMF 320 may distribute requirements to each domain based on the SLA mapping result. For example, the CSMF 310 and the NSMF 320 may transmit a RAN SLA to a radio access network (RAN) NSSMF, and the RAN SLA may include RAN-related requirements (e.g., DL throughput: 20 Mbps, latency: 30ms, service area: 1, 2, 3). In addition, the CSMF 310 and NSMF 320 may transmit the core SLA to the core NSSMF, and may transmit the transport SLA to the transport NSSMF. The core SLA may include requirements related to the core network (e.g., UPF throughput: 100Gbps, latency: 10ms), and the transport SLA may include requirements related to transmission (e.g., link capability: 100Gbps, latency: 10ms). According to various embodiments of the disclosure, the NSSMF 330 is described as a RAN NSSMF requiring service area requirements, but is understood that the NSSMF 330 may include at least one of the core NSSMF and the transport NSSMF depending on the parameters required by the NSSMF 330. The NSSMF 330 having received the SLA mapping result including service requirements may identify a target network entity (NE) and generate a slice for each specific domain. For example, the NSSMF 330 may configure a network slice for each NF identified based on service requirements.

As described above, procedures for generating or configuring a network slice may be performed based on service requirements. In particular, the operation of generating or configuring a network slice based on requirements for the service area and transmitting configuration information may be performed as follows.

Referring to FIG. 3, the OSS/BSS 300 may transmit parameters related to the service area (e.g., service coverage) to the CMSF 310. The service area-related parameters received by the CMSF 310 may include at least one of a generic network slice template (GST) or a network slice type (NEST). The GST may include a set of attributes (e.g., availability, energy efficiency, number of UEs, quality of service (QoS)) that may characterize the type of network slice/service, and the NEST may include a GST expressed as a value. The CSMF 310 may map service requirements to the attributes included in the GST by using the value generated by the NEST.

The CSMF 310 may generate (or convert) a service profile, based on the GST or NEST. The CSMF 310 may transmit the service profile to the NSMF 320.

The NSMF 320 may perform the role of managing and orchestrating network slice instance (NSI) and deriving network slice subnet requirements. For example, the NSMF 320 may generate (or convert) a slice profile, which is a requirement for a network slice, based on the service profile received from the CSMF 310.

The NSMF 320 may transfer the slice profile to the NSSMF 330. The NSSMF may include a radio access network (RAN)-NSSMF 330, a core network (CN)-NSSMF 332, or a transport network (TN)-NSSMF 334. According to various embodiments of the disclosure, the NSSMFs described above may include NSSMFs that manage RAN-related slices, core network-related slices, and transport network-related slices, respectively, and each may play a role of processing information about the TAC. However, for convenience, it is disclosed as the NSSMF 330 below, but the NSSMF of the disclosure is not limited to the RAN-NSSMF, and may include NSSMFs that manage various slices. According to an embodiment, one NSMF 320 may manage multiple NSSMFs 330. However, the NSMF 320 may generally manage information (for example, tracking area code (TAC)) about all areas it serves, but it may not know which areas are managed (or covered) by the individual NSSMF 330. Therefore, the NSMF 320 needs to receive information about an area managed by the individual NSSMF 330 to configure the network slice service, and the synchronization process in accordance therewith may cause delays and unnecessary overhead. The disclosure describes a method in which the NSMF 320 may provide a slice service without information on an area managed by each NSSMF 330 and a specific identification process of the information.

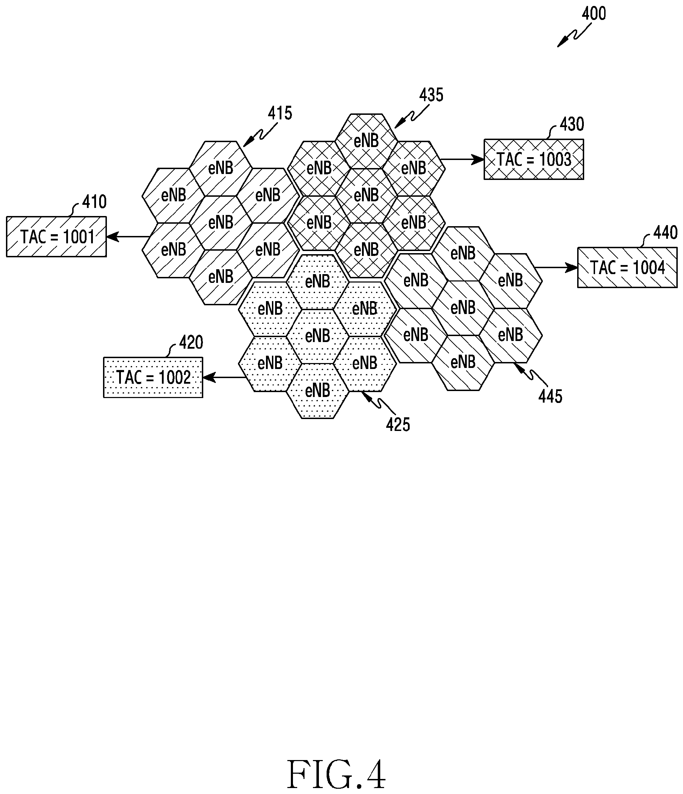

FIG. 4 illustrates an example of a tracking area code (TAC) for a service profile according to various embodiments of the disclosure. Specifically, the NSMF may require information about TAC, as basic information, among the requirements of the NSSMF (particularly in the case of RAN NSSMF) for the network slice generation. According to an embodiment, the NSSMF may include RAN-NSSMF, CN-NSSMF, or TN-NSSMF. The information about TAC may be used when requesting the configuration of a specific slice service in a specific area. According to an embodiment, referring to FIG. 4, an example 400 of a service area of a wireless communication system (5G or 4G/LTE) according to TAC is shown.

Referring to FIG. 4, the coverage area of a wireless communication system may be divided into multiple cells 415, 425, 435, and 445, which are typically grouped with one or more base stations. Here, the base station may be configured by at least one cell, and handover between base stations or between cells may occur depending on the movement of the UE. In addition, in FIG. 4, the base station is shown as an eNB, but this is only an example for convenience, and the base station may include a base station that performs similar functions, including a gNB for a 5G network system. A UE located in each of cells 415, 425, 435, and 445 may access a wireless communication system by establishing a wireless communication link, often called a wireless interface, with a base station associated with the corresponding cell.

A network operator may define tracking area codes (TACs) 410, 420, 430, and 440 by grouping multiple base stations. The network operator may register TAL in the system by grouping multiple TACs. For example, based on geographic location, cells 415 located in a first region may be grouped into a first TAC (TAC value = 1001), and cells located in second, third, and fourth regions 425, 435, and 445 may also be grouped into the second, third, and fourth TACs, respectively (TAC values = 1002, 1003, and 1004, respectively). According to various embodiments of the disclosure, the unit of service area information required by the network slice service may be a TAC. Furthermore, base stations of the network operator may be grouped based on the tracking area code (TAC). The TAL based on the TAC may be registered on the server of the network operator.

According to various embodiments of the disclosure, the NSMF may generally receive information about a region corresponding to a corresponding service slice from the CSMF in order to generate a network slice, and may identify a TAC list corresponding to the information about the region. The NSMF may distribute TAC values to the NSSMFs including NEs supporting the region, based on the identified TAC list. In the process described above, the NSMF should know which TACs are supported by the (RAN) NSSMFs (e.g., whether an NE supporting a predetermined area is included) or whether the operator should be able to provide automatically or manually, together with the TAC, the NSMF with information about the NSSMF managing the TAC. In other words, the NSMF should have information about the NSSMFs that manage the TACs needed for slice generation, and when a new TAC is added, more process may be required to synchronize the new TAC between the NSMF and the NSSMF. In the above situation, in the case of a multi-operator radio access network (MORAN) structure, the NSMF may have configured different TAC values with respect to the same distributed unit (DU) or cell for each operator, and the synchronization process for the TAC information that the NSMF should perform or the information about the TAC that the NSMF should have may cause excessive latency and unnecessary overhead. Accordingly, various embodiments of the disclosure provide a method capable of providing a network slice service without requiring TAC information managed by each NSSMF included in the NSMF or an identification process (e.g., synchronization) of the TAC information.

According to various embodiments of the disclosure, a method is described in which the NSMF is capable of generating, adding, or changing a network slice independent of the synchronization process and the identification of whether the NSSMF supports the TAC in relation to the service requirements. In addition, various embodiments may be applied not only to the case in which the NSSMF is linked to an element management system (EMS) to perform procedures, but also to the case in which the NE having a new TAC is added. Various embodiments provide slice requirements for TAC information, but not limited to this, the same operation can be applied by including any parameter information related to the requirements of the network slice service.

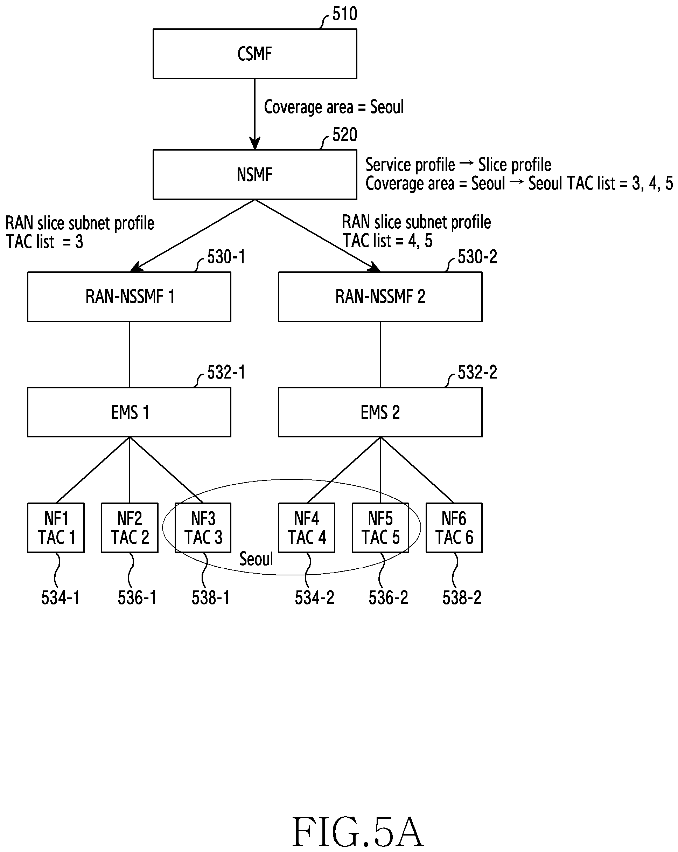

FIG. 5A illustrates an example of a structure for network slice configuration for allocating an individual TAC list based on a TAC supported by an NSSMF according to various embodiments of the disclosure. Specifically, referring to FIG. 5A, a structure for network slice configuration is shown when an NSMF 520 knows information about a TAC managed by an NSSMF 530-1 or 530-2.

According to an embodiment, a CSMF 510 may transfer a service profile based on service requirements to the NSMF 520. The service profile transferred by the CSMF 510 to the NSMF 520 may include information indicating that a service area (e.g., coverage area) is a specific area (e.g., Seoul). The NSMF 520 may change the service profile received from the CSMF 510 to a slice profile. Parameters for the service area included in the service profile may be expressed as a TAC list in the slice profile. For example, when a specific area includes TAC 3, TAC 4, and TAC 5, the slice profile generated by the NSMF 520 may include a TAC list for the specific area (e.g., TAC list=3, 4, 5).

According to an embodiment, the NSMF 520 may know that TACs covering a specific area included in the service requirement include TAC 3, TAC 4, and TAC 5. In addition, the NSMF 520 may be aware of TACs associated with individual NSSMF 530-1 or 530-2 managed by the NSMF 520. For example, the NSMF 520 may know in advance that RAN NSSMF 1 530-1 is associated with NFs 534-1, 536-1, and 538-1 for TAC 1, TAC 2, and TAC 3, and that RAN NSSMF 2 530-2 is associated with NFs 534-2, 536-2, and 538-2 for TAC 4, TAC 5, and TAC 6. As such, the NSMF 520 may further require specific operations of receiving and identifying information about the TACs with which individual NSSMFs are associated.

According to an embodiment, the NSMF 520 may identify TACs managed by each NSSMF 530-1 or 530-2, based on a TAC list for a specific area, and may transfer a slice subnet profile including the identified TACs to correspond to each NSSMF 530-1 or 530-2. For example, the NSMF 520 may transmit, to the RAN NSSMF 1 530-1, a slice subnet profile including a slice configuration request for TAC 3, and may transmit, to the RAN NSSMF 2 530-2, a slice subnet profile including a slice configuration request for TAC 4 and TAC 5. The NSSMF 530-1 or 530-2 may configure a network slice for each NF by using the received slice subnet profile as is. The NSMF 520 may receive a response regarding slice subnet configurations from the NSSMF 530-1 or 530-2 associated with the corresponding TAC and, based thereon, may generate a network slice for network service according to detailed parameters.

However, as described above, referring to FIG. 5A, the NSMF 520 should know information about a TAC managed by each NSSMF 530-1 or 530-2 in advance, and therefore an operation of receiving or identifying the information about the TAC may be further required. In addition, when an NF with a new TAC value is added to each NSSMF 530-1 or 530-2 or EMS 532-1 or 532-2 related to the NSSMF 530-1 or 530-2, information regarding thereof should be received or identified, and the process of generating a slice subnet profile should be repeated once again accordingly, which may significantly increase delay time and unnecessary overhead.

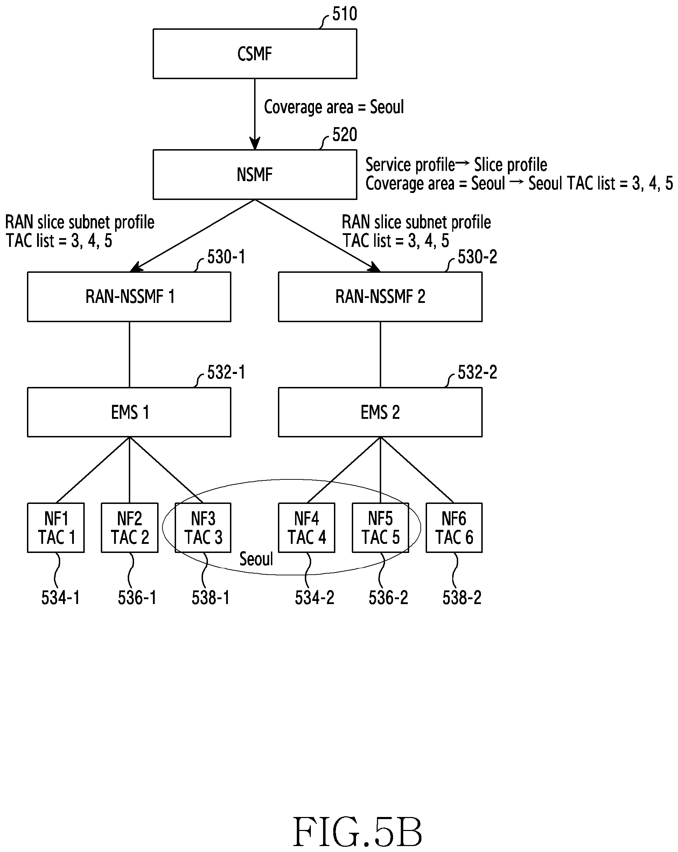

FIG. 5B shows another example of a structure for network slice configuration by which an NSSMF allocates a TAC list based on area information configured according to various embodiments of the disclosure. Specifically, referring to FIG. 5B, a structure for network slice configuration for the NSMF 520 is shown independent of information about a TAC managed by the NSSMF 530-1 or 530-2.

According to an embodiment, the CSMF 510 may transfer a service profile based on service requirements to the NSMF 520. The service profile transferred by the CSMF 510 to the NSMF 520 may include information indicating that the service area (e.g., coverage area) is a specific area (e.g., Seoul). The NSMF 520 may change the service profile received from the CSMF 510 to a slice profile. Parameters for the service area included in the service profile may be expressed as a TAC list in the slice profile. For example, when a specific area includes TAC 3, TAC 4, and TAC 5, the slice profile generated by the NSMF 520 may include a TAC list for the specific area (e.g., TAC list=3, 4, 5).

According to an embodiment, the NSMF 520 may know that TACs covering a specific area included in the service requirement include TAC 3, TAC 4, and TAC 5. However, the NSMF 520 may not know information about TACs associated with individual NSSMFs 530-1 and 530-2 managed by the NSMF 520. Accordingly, the NSMF 520 may generate a slice subnet profile that includes all TAC values corresponding to a specific area.

According to an embodiment, the generated slice subnet profile may be jointly transferred to both NSSMFs 530-1 and 530-2 independent of individual characteristics. For example, the NSMF 520 may jointly transmit a slice subnet profile including slice configuration requests for TAC 3, TAC4, and TAC 5 to RAN NSSMF 1 530-1 and RAN NSSMF 2 530-2. The NSSMF 530-1 or 530-2 may configure slices only for the TACs associated with the NFs, managed by the NSSMF itself, based on the received slice subnet profile. In addition, the NSSMF 530-1 or 530-2 may respond to the NSMF 520 only for a TAC for which a slice is configured (e.g., the NSSMF 1 configures TAC 3, and the NSSMF 2 configures TAC 4 and TAC 5). The NSMF 520 may receive a response regarding slice subnet configuration to know which TAC an individual NSSMF has configured a slice for, and based on this, may generate a network slice for network service according to detailed parameters.

Therefore, according to various embodiments of the disclosure, referring to FIG. 5B, the NSMF 520 may generate a slice without information about the TAC associated with the NSSMF 530-1 or 530-2 or a synchronization process of information. As a result, it may be possible to configure a network slice in which the complexity of the associated signaling and processing is also effectively reduced. The following describes specific operations of the NSMF 520 or NSSMF 530-1 and 530-2 in this regard.

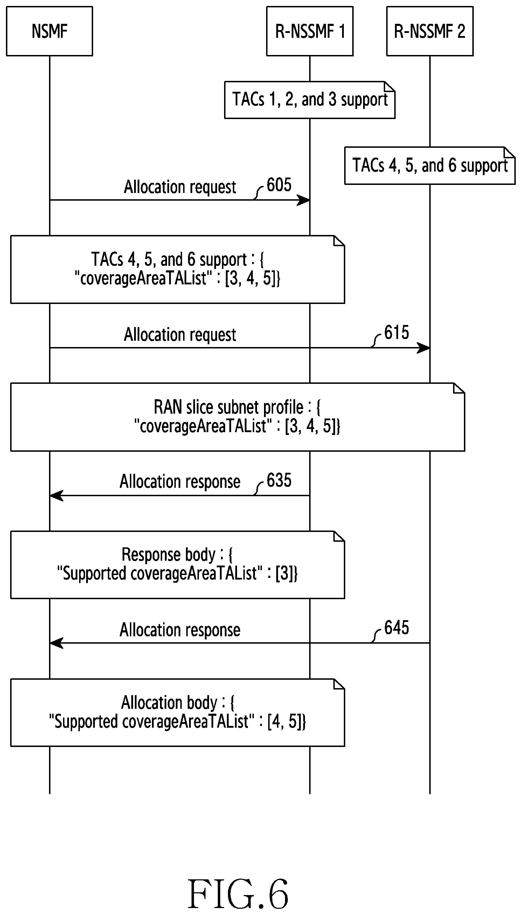

FIG. 6 illustrates a signal flow for network slice configuration according to various embodiments of the disclosure. Specifically, FIG. 6 shows the flow of operations for the NSMF to configure a network slice independent of information about a TAC supported by the NSSMF. Referring to FIG. 6, R-NSSMF 1 and R-NSSMF 2 are shown, but are shown only for convenience and are not limited thereto, and may refer to RAN-NSSMF 1 and RAN-NSSMF 2.

Referring to FIG. 6, according to an embodiment, the first NSSMF (e.g., RAN-NSSMF 1) may support TACs 1 to 3. For example, the first NSSMF may manage NFs associated with TACs 1 to 3, respectively, through the EMS. According to an embodiment, the second NSSMF (e.g., RAN-NSSMF 2) may support TAC 4 to 6. For example, the second NSSMF may manage NFs associated with TACs 4 to 6, respectively, through the EMS.

According to an embodiment, although not shown in FIG. 6, the NSMF may receive information about the service profile from the OSS/BSS or the CSMF. The information about the service profile may include requirements for performance and non-performance for requesting a service, as shown in FIG. 3. Specifically, the information about the service profile may be configured such that requirements for throughput, delay time, or service area may be expressed as specific values through SLA mapping. For example, the NSMF may identify that the service profile includes requirements for a specific area (e.g., Seoul).

According to an embodiment, the NSMF may convert a service profile into a slice profile for generating a network slice. According to an embodiment, in the case of a requirement regarding a service area, the NSMF may generate a slice profile including a list of TACs identified based on at least one TAC corresponding to a specific area of the service profile. For example, when a specific area included in the service requirement includes TACs 3 to 5, the NSMF may generate a slice profile based on the TAC list including TACs 3 to 5.

According to various embodiments of the disclosure, although not shown in FIG. 6, the NSMF may identify whether it includes information about at least one TAC associated with the NSSMF managed by the NSMF. According to an embodiment, when the NSMF includes (e.g., knows) information about the TAC of the NSSMF, the NSMF may individually identify the TACs associated with each NSSMF in the TAC list of the slice profile, and based on the result of identification, the NSMF may generate a slice subnet profile to be transmitted to each NSSMF.

According to an embodiment, when the NSMF does not include (e.g., does not know) information about the TACs of the NSSMF, the NSMF may generate a slice subnet profile to be transmitted to each NSSMF without specifically requesting or receiving information about the TACs of the NSSMF. At this time, the slice subnet profile generated by the NSMF may include information about all TACs included in the TAC list of the slice profile. For example, the NSMF may generate a slice subnet profile based only on the TAC list included in the slice profile independent of information about the NSSMF. According to an embodiment, when the NSMF has generated a slice subnet profile that includes all TACs identified based on the service profile, the flow may proceed to operation 605.

In operation 605, the NSMF may transmit an allocation request message to the first NSSMF. The allocation request message transmitted by the NSMF may include information about the slice subnet profile, and the slice subnet profile may include information about all TACs required by the slice profile. For example, when the service profile received by the NSMF includes information about a specific area, the NSMF may transmit a slice subnet profile including information about all TACs corresponding to the specific area to the first NSSMF. According to an embodiment, the first NSSMF may include at least one of RAN NSSMF, core NSSMF, or transport NSSMF.

In operation 615, the NSMF may transmit an allocation request message to the second NSSMF. Similar to operation 605, the allocation request message transmitted by the NSMF may include information about the slice subnet profile, and the slice subnet profile may include information about all TACs required by the slice profile. For example, when the service profile received by the NSMF includes information about a specific area, the NSMF may transmit a slice subnet profile including information about all TACs corresponding to the specific area to the second NSSMF. According to an embodiment, the second NSSMF may include at least one of RAN NSSMF, core NSSMF, or transport NSSMF.

According to an embodiment, although not shown in FIG. 6, the first NSSMF and the second NSSMF may identify information about the associated TAC, based on the TAC list included in the received allocation request message (e.g., slice subnet profile). For example, the first NSSMF may determine at least one TAC (e.g., TAC 3) corresponding to a TAC (e.g., TACs 1 to 3) supported by the first NSSMF among the TACs (e.g., TACs 3 to 5) of the slice subnet profile. For example, the second NSSMF may determine at least one TAC (e.g., TAC 4 and TAC 5) corresponding to a TAC (e.g., TAC 4 to 6) supported by the second NSSMF among the TACs (e.g., TACs 3 to 5) of the slice subnet profile. According to an embodiment, the first NSSMF or the second NSSMF may determine at least one TAC, based on the TACs of the slice subnet profile even when no TAC is supported. For example, the NSSMF may determine at least one TAC that is most associated with the TACs in the slice subnet profile, or may determine an indicator indicating that there is no corresponding TAC.

According to an embodiment, although not shown in FIG. 6, the first NSSMF and the second NSSMF may compare the TAC list included in the slice subnet profile with the TACs supported by each NSSMF to further identify the most relevant TAC. For example, the NSSMF may further identify at least one TAC among the TACs supported by the NSSMF and a difference between values of the at least one TAC and the TACs included in the TAC list does not exceed a threshold value. The difference here may include a difference in the code values of the TACs, a difference based on geographical location, or a difference in the values of each TAC determined by a predefined table. Here, the threshold value may be a threshold criterion, may be determined based on a specific geographic distance, or may be preconfigured.

In operation 625, the first NSSMF may transmit an allocation response message including information about the determined at least one TAC (e.g., TAC 3) to the NSMF. According to an embodiment, the first NSSMF may configure a network slice based on information about at least one identified TAC. According to an embodiment, the allocation response message received by the NSMF is only an example and may include any information or message having an equivalent or similar function.

In operation 635, the second NSSMF may transmit an allocation response message including information about the determined at least one TAC (e.g., TAC 4 and TAC 5) to the NSMF. According to an embodiment, the allocation response message received by the NSMF is only an example and may include any information or message having an equivalent or similar function. According to an embodiment, the second NSSMF may configure a network slice based on information about at least one identified TAC.

According to the operations described above, the NSMF may identify the TAC supported by individual NSSMF and, based on the identification, may generate a network slice according to service requirements. According to various embodiments of the disclosure, the NSMF may transmit a request message for configuration of a network slice to each NSSMF without a procedure for receiving or identifying information about the TAC supported by individual NSSMF, and based on a response message that is scheduled accordingly, may identify the TAC supported by each NSSMF and generate a network slice. For example, according to various embodiments, the NSMF transmits only information that is common to all NSSMFs, and the NSSMF performs identification of the TAC corresponding to the TAC supported by each NSSMF in the TAC list of the slice subnet profile, thereby dramatically reducing unnecessary signaling and complexity.

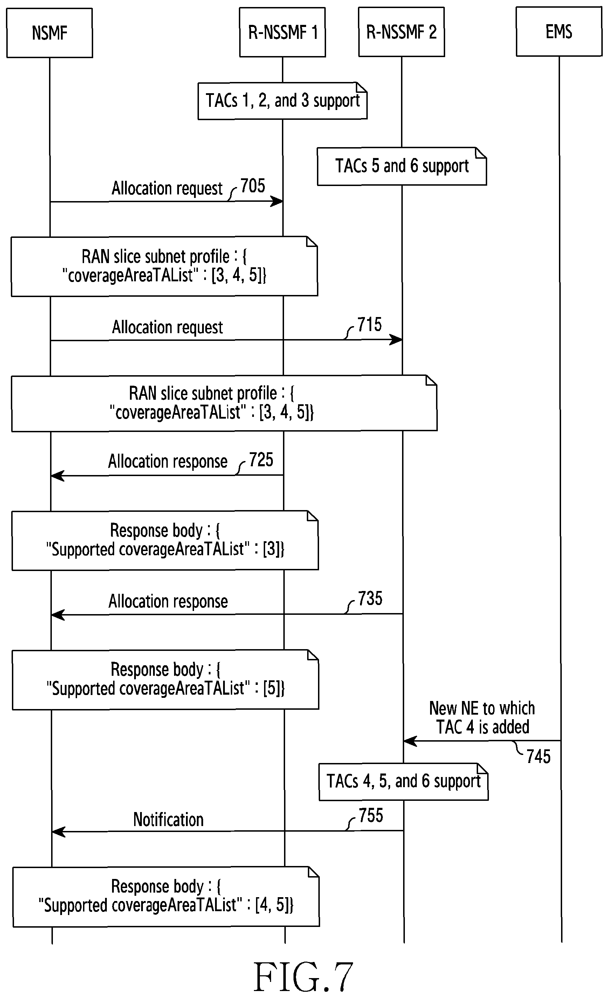

FIG. 7 illustrates another signal flow for network slice configuration according to various embodiments of the disclosure. Specifically, FIG. 7 shows the flow of operations for network slice configuration when information about TAC supported by the NSSMF is changed. Referring to FIG. 7, R-NSSMF 1 and R-NSSMF 2 are shown, but are shown only for convenience and are not limited thereto, and may refer to RAN-NSSMF 1 and RAN-NSSMF 2.

Referring to FIG. 7, according to an embodiment, the first NSSMF (e.g., RAN-NSSMF 1) may support TAC 1 to 3. For example, the first NSSMF may manage NFs associated with TACs 1 to 3, respectively, through the EMS. According to an embodiment, the second NSSMF (e.g., RAN-NSSMF 2) may support TACs 5 to 6. For example, the second NSSMF may manage NFs associated with TACs 5 to 6, respectively, through the EMS.

According to an embodiment, although not shown in FIG. 7, the NSMF may receive information about the service profile from the OSS/BSS or the CSMF. The information about the service profile may include requirements for performance and non-performance for requesting a service, as shown in FIG. 3. Specifically, the information about the service profile may be configured such that requirements for throughput, delay time, or service area may be expressed as specific values through SLA mapping. For example, the NSMF may identify that the service profile includes requirements for a specific area (e.g., Seoul).

According to an embodiment, the NSMF may convert a service profile into a slice profile for generating a network slice. According to an embodiment, in the case of a requirement regarding a service area, the NSMF may generate a slice profile including a list of TACs identified based on at least one TAC corresponding to a specific area of the service profile. For example, when a specific area included in the service requirement includes TACs 3 to 5, the NSMF may generate a slice profile based on the TAC list including TACs 3 to 5.

According to various embodiments of the disclosure, although not shown in FIG. 7, the NSMF may identify whether it includes information about at least one TAC associated with the NSSMF managed by the NSMF. According to an embodiment, when the NSMF includes (e.g., knows) information about the TAC of the NSSMF, the NSMF may individually identify the TACs associated with each NSSMF in the TAC list of the slice profile, and based on the result of identification, the NSMF may generate a slice subnet profile to be transmitted to each NSSMF.

According to an embodiment, when the NSMF does not include (e.g., does not know) information about the TACs of the NSSMF, the NSMF may generate a slice subnet profile to be transmitted to each NSSMF without specifically requesting or receiving information about the TACs of the NSSMF. At this time, the slice subnet profile generated by the NSMF may include information about all TACs included in the TAC list of the slice profile. For example, the NSMF may generate a slice subnet profile based only on the TAC list included in the slice profile independent of information about the NSSMF. According to an embodiment, when the NSMF has generated a slice subnet profile that includes all TACs identified based on the service profile, the flow may proceed to operation 705.

In operation 705, the NSMF may transmit an allocation request message to the first NSSMF. The allocation request message transmitted by the NSMF may include information about the slice subnet profile, and the slice subnet profile may include information about all TACs required by the slice profile. For example, when the service profile received by the NSMF includes information about a specific area, the NSMF may transmit a slice subnet profile including information about all TACs corresponding to the specific area to the first NSSMF. According to an embodiment, the first NSSMF may include at least one of RAN NSSMF, core NSSMF, or transport NSSMF.

In operation 715, the NSMF may transmit an allocation request message to the second NSSMF. Similar to operation 705, the allocation request message transmitted by the NSMF may include information about the slice subnet profile, and the slice subnet profile may include information about all TACs required by the slice profile. For example, when the service profile received by the NSMF includes information about a specific area, the NSMF may transmit a slice subnet profile including information about all TACs corresponding to the specific area to the second NSSMF. According to an embodiment, the second NSSMF may include at least one of RAN NSSMF, core NSSMF, or transport NSSMF.

According to an embodiment, although not shown in FIG. 7, the first NSSMF and the second NSSMF may identify information about the associated TAC, based on the TAC list included in the received allocation request message (e.g., slice subnet profile). For example, the first NSSMF may determine at least one TAC (e.g., TAC 3) corresponding to a TAC (e.g., TAC 1 to 3) supported by the first NSSMF among the TACs (e.g., TACs 3 to 5) of the slice subnet profile. For example, the second NSSMF may determine at least one TAC (e.g., TAC 5) corresponding to a TAC (e.g., TAC 5 to 6) supported by the second NSSMF among the TACs (e.g., TACs 3 to 5) of the slice subnet profile. According to an embodiment, the first NSSMF or the second NSSMF may determine at least one TAC, based on the TACs of the slice subnet profile even when no TAC is supported. For example, the NSSMF may determine at least one TAC that is most associated with the TACs in the slice subnet profile, or may determine an indicator indicating that there is no corresponding TAC.

According to an embodiment, although not shown in FIG. 7, the first NSSMF and the second NSSMF may compare the TAC list included in the slice subnet profile with the TACs supported by each NSSMF to further identify the most relevant TAC. For example, the NSSMF may further identify at least one TAC among the TACs supported by the NSSMF and a difference between values of the at least one TAC and the TACs included in the TAC list does not exceed a threshold value. The difference here may include a difference in the code values of the TACs, a difference based on geographical location, or a difference in the values of each TAC determined by a predefined table for each TAC. Here, the threshold value may be a threshold criterion, may be determined based on a specific geographic distance, or may be preconfigured.

According to an embodiment, although not shown in FIG. 7, the first NSSMF and the second NSSMF may store information about the TAC list included in the allocation request message. In other words, the NSSMF may store information about the TACs included in the TAC list of the slice subnet profile, in addition to the TACs supported by the NSSMF. For example, in a later operation, when the information about the TACs managed by the NSSMF is changed, the NSSMF may additionally identify at least one TAC, based on the stored TAC list. Therefore, the first NSSMF and the second NSSMF may adaptively update responses to changes in detailed parameters by storing information on the requirements for generating and configuring network slices without additional signaling.

In operation 725, the first NSSMF may transmit an allocation response message including information about the determined at least one TAC (e.g., TAC 3) to the NSMF. According to an embodiment, the first NSSMF may configure a network slice based on information about at least one identified TAC. According to an embodiment, the allocation response message received by the NSMF is only an example and may include any information or message having an equivalent or similar function.

In operation 735, the second NSSMF may transmit an allocation response message including information about the determined at least one TAC (e.g., TAC 4 and TAC 5) to the NSMF. According to an embodiment, the second NSSMF may configure a network slice based on information about at least one identified TAC. According to an embodiment, the allocation response message received by the NSMF may be an example only, and may include any information or message having equivalent or similar function.

In operation 745, the second NSSMF may identify that a NE with a new TAC has been added. According to embodiments of the disclosure, referring to FIG. 7, the second NSSMF is described as having been added with an NE associated with TAC 4 from the EMS, but this is only an example, and of course includes situations equivalent or similar to the case in which any NSSMF associated with the NSMF supports a new TAC. According to an embodiment, when a new TAC is added to the TAC supported by the NSSMF, the NSSMF may identify whether a corresponding TAC exists by comparing the added TAC with the prestored TAC list of the slice subnet profile. For example, when an NE associated with TAC 4, which is a new TAC, is added to the second NSSMF, the second NSSMF may support TACs 4 to 6. The second NSSMF may identify whether the newly supported TAC 4 is included in the TAC list of the slice subnet profile stored in a previous operation. According to an embodiment, similar to a case in which a TAC is added as described above, the same procedure may be performed when some of the TACs previously supported by the NSSMF are deleted. For example, among the TACs 1 to 3 supported by the first NSSMF, when NEs associated with TAC 3 are cancelled, the first NSSMF may compare them with the prestored TAC list of the slice subnet profile to identify whether there are corresponding TACs excluding the cancelled TACs.

In operation 755, the NSSMF in which a change in a supported TAC has occurred may transmit a new response notification message to the NSMF. In an embodiment, the response notification message transmitted by the NSSMF may be generated based on information about at least one TAC that has been changed (e.g., added or cancelled).

According to the operations described above, the NSMF may identify the TAC supported by individual NSSMF and, based on the identification, may generate a network slice according to service requirements. According to various embodiments of the disclosure, the NSMF may transmit a request message for configuration of a network slice to each NSSMF without a procedure for receiving or identifying information about the TAC supported by individual NSSMF, and based on a response message that is scheduled accordingly, may identify the TAC supported by each NSSMF and generate a network slice. For example, according to various embodiments, the NSMF transmits only information that is common to all NSSMFs, and the NSSMF performs identification of the TAC corresponding to the TAC supported by each NSSMF in the TAC list of the slice subnet profile, thereby dramatically reducing unnecessary signaling and complexity.

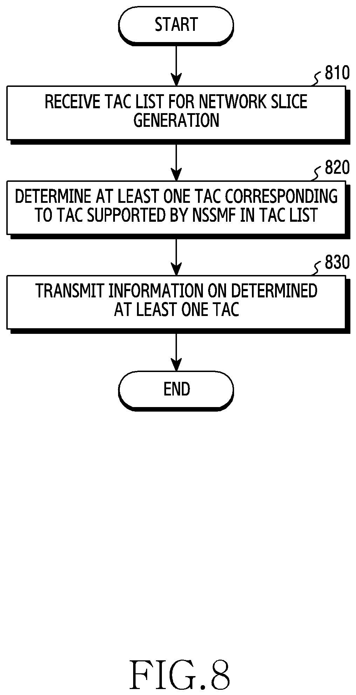

FIG. 8 illustrates an operation flow of a network slice subnet management function (NSSMF) for network slice configuration according to various embodiments of the disclosure. According to various embodiments of the disclosure, with reference to FIG. 8, an operational flow of NSSMF associated with the operations disclosed in FIGS. 3 to 7 is shown.

In operation 810, the NSSMF may receive a TAC list for network slice generation from the NSMF. Specifically, according to an embodiment, the NSSMF may receive an allocation request message from the NSMF. The allocation request message received by the NSSMF may include information about a slice subnet profile, and the slice subnet profile may include information about all detailed parameters required by the slice profile received by the NSMF. For example, when the service profile received by the NSMF includes information about a specific area, the NSMF may transmit a slice subnet profile including information about all TACs corresponding to the specific area to the NSSMF. According to an embodiment, the NSSMF may include at least one of RAN NSSMF, core NSSMF, or transport NSSMF.

In operation 820, the NSSMF may determine at least one TAC corresponding to a TAC supported by the NSSMF in the TAC list. Specifically, according to an embodiment, the NSSMF may identify information about the associated TAC, based on the TAC list included in the received allocation request message (e.g., slice subnet profile). According to an embodiment, the NSSMF may determine at least one TAC, based on the TACs of the slice subnet profile even when there is no supported TAC. For example, the NSSMF may determine at least one TAC that is most associated with the TACs in the slice subnet profile, or may determine an indicator indicating that there is no corresponding TAC.

According to an embodiment, the NSSMF may further identify the most relevant TAC by comparing the TAC list included in the slice subnet profile with the TAC supported by the NSSMF. For example, the NSSMF may further identify at least one TAC may further identify at least one TAC among the TACs supported by the NSSMF and a difference between values of the at least one TAC and the TACs included in the TAC list does not exceed a threshold value. The difference here may include a difference in the code values of the TACs, a difference based on geographical location, or a difference in the values for each TAC determined by a predefined table. Here, the threshold value may be a threshold criterion, may be determined based on a specific geographic distance, or may be preconfigured.

According to an embodiment, the NSSMF may store information about the TAC list included in the allocation request message. That is, the NSSMF may store information about TACs included in the TAC list of the slice subnet profile, in addition to the TACs supported by the NSSMF. For example, in a later operation, when information about the TAC managed by the NSSMF changes, the NSSMF may additionally identify at least one TAC based on the stored TAC list. Accordingly, the NSSMF may adaptively update responses to changes in detailed parameters by storing information about the requirements for generating and configuring network slices without additional signaling.

In operation 830, the NSSMF may transmit an allocation response message including information about the determined at least one TAC to the NSMF. According to an embodiment, the NSSMF may configure a network slice, based on information about at least one identified TAC. According to an embodiment, the allocation response message received by the NSMF is only an example and may include any information or message having an equivalent or similar function.

Although not shown in FIG. 8, according to various embodiments of the disclosure, the NSSMF may identify that an NE with a new TAC has been added. According to an embodiment, the NSSMF may receive information from the EMS that a new NE associated with a new TAC has been added. According to an embodiment, when a new TAC is added to the TAC supported by the NSSMF, the NSSMF may identify whether a corresponding TAC exists by comparing the added TAC with the prestored TAC list of the slice subnet profile. For example, when an NE associated with a new TAC is added to the NSSMF, the NSSMF may support the new TAC in addition to the previously supported TAC. The NSSMF may identify whether the newly supported TAC is included in the TAC list of the slice subnet profile stored in the previous operation.

According to an embodiment, similar to a case in which a TAC is added as described above, the same procedure may be performed when some of the TACs previously supported by the NSSMF are deleted. For example, among the TACs supported by the NSSMF, when NEs associated with some TACs are cancelled, the NSSMF compares them with the prestored TAC list of the slice subnet profile to identify whether there are corresponding TACs excluding the cancelled TACs.

According to an embodiment, the NSSMF in which a change in the supported TAC has occurred may transmit a new response notification message to the NSMF. According to an embodiment, the response notification message transmitted by the NSSMF may be generated based on information about at least one TAC that has been changed (e.g., added or cancelled).

According to the operations described above, the NSMF may identify the TAC supported by individual NSSMF, and based on the identification, may generate a network slice according to service requirements. According to various embodiments of the disclosure, the NSMF may transmit a request message for configuration of a network slice to each NSSMF without a procedure for receiving or identifying information about the TAC supported by individual NSSMF, and based on a response message that is scheduled accordingly, may identify the TAC supported by each NSSMF and generate a network slice. For example, according to various embodiments, the NSMF transmits only information that is common to all NSSMFs, and the NSSMF performs identification of the TAC corresponding to the TAC supported by each NSSMF in the TAC list of the slice subnet profile, thereby dramatically reducing unnecessary signaling and complexity.

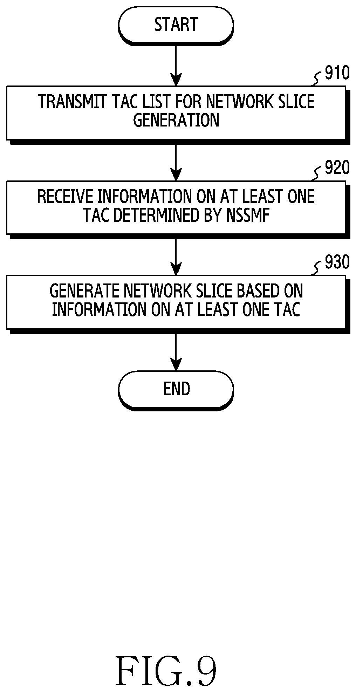

FIG. 9 illustrates an operation flow of a network slice management function (NSMF) for network slice configuration according to various embodiments of the disclosure. In accordance with various embodiments of the disclosure, with reference to FIG. 9, the operational flow of NSMF associated with the operations disclosed in FIGS. 3 to 7 is shown.

Although not shown in FIG. 9, the NSMF may receive information about the service profile from the OSS/BSS or the CSMF. The information about the service profile may include requirements for performance and non-performance for requesting a service, as shown in FIG. 3. Specifically, the information about the service profile may be configured such that requirements for throughput, delay time, or service area may be expressed as specific values through SLA mapping. For example, the NSMF may identify that the service profile includes requirements for a specific area (e.g., Seoul).

According to an embodiment, the NSMF may convert a service profile into a slice profile for generating a network slice. According to an embodiment, in the case of a requirement regarding a service area, the NSMF may generate a slice profile including a list of TACs identified based on at least one TAC corresponding to a specific area of the service profile. For example, when a specific area included in the service requirement includes TACs 3 to 5, the NSMF may generate a slice profile based on the TAC list including TACs 3 to 5.

According to various embodiments of the disclosure, although not shown in FIG. 9, the NSMF may identify whether it includes information about at least one TAC associated with the NSSMF managed by the NSMF. According to an embodiment, when the NSMF includes (e.g., knows) information about the TAC of the NSSMF, the NSMF may individually identify the TACs associated with each NSSMF in the TAC list of the slice profile, and based on the result of identification, the NSMF may generate a slice subnet profile to be transmitted to each NSSMF.

According to an embodiment, when the NSMF does not include (e.g., does not know) information about the TACs of the NSSMF, the NSMF may generate a slice subnet profile to be transmitted to each NSSMF without specifically requesting or receiving information about the TACs of the NSSMF. At this time, the slice subnet profile generated by the NSMF may include information about all TACs included in the TAC list of the slice profile. For example, the NSMF may generate a slice subnet profile based only on the TAC list included in the slice profile independent of information about the NSSMF. According to an embodiment, when the NSMF has generated a slice subnet profile that includes all TACs identified based on the service profile, the flow may proceed to operation 910.

In operation 910, the NSMF may transmit an allocation request message including a TAC list for network slice generation to the NSSMF. According to an embodiment, the NSMF may transmit an allocation request message including the same information to all NSSMFs associated with the NSMF. The allocation request message transmitted by the NSMF may include information about the slice subnet profile, and the slice subnet profile may include information about all TACs required by the slice profile. For example, when the service profile received by the NSMF includes information about a specific area, the NSMF may transmit a slice subnet profile including information about all TACs corresponding to the specific area to the NSSMF. According to an embodiment, the NSSMF may include at least one of RAN NSSMF, core NSSMF, or transport NSSMF.

Although not shown in FIG. 9, the NSSMF may generate an allocation response message based on the slice subnet profile transmitted by the NSMF. The specific operation of NSSMF in this regard is described in detail in FIGS. 6 to 8.

In operation 920, the NSMF may receive, from the NSSMF, an allocation response message including information about the determined at least one TAC. According to an embodiment, the NSSMF may configure a network slice based on information about at least one identified TAC. According to an embodiment, the allocation response message received by the NSMF is only an example and may include any information or message having an equivalent or similar function.

According to an embodiment, when a change occurs in the TAC supported by the NSSMF, the NSMF may further receive a new response notification message including information about one or more changed TACs from the NSSMF. The specific operation of NSSMF in this regard is described in detail in FIGS. 6 to 8.

In operation 930, the NSMF may generate a network slice based on the allocation response message or response notification message received from the NSSMF. According to an embodiment, the NSMF may generate a network slice based on the allocation response message received from the NSSMF and including information about at least one TAC, and thereafter, the NSMF may update information about the network slice or the NSSMF based on the received response notification message including information about one or more TACs. According to the operations described above, the NSMF may identify the TAC supported by individual NSSMF and, based on the identification, may generate a network slice according to service requirements. According to various embodiments of the disclosure, the NSMF may transmit a request message for configuration of a network slice to each NSSMF without a procedure for receiving or identifying information about the TAC supported by individual NSSMF, and based on a response message that is scheduled accordingly, may identify the TAC supported by each NSSMF and generate a network slice. For example, according to various embodiments, the NSMF transmits only information that is common to all NSSMFs, and the NSSMF performs identification of the TAC corresponding to the TAC supported by each NSSMF in the TAC list of the slice subnet profile, thereby dramatically reducing unnecessary signaling and complexity.

According to various embodiments of the disclosure, a method performed by a network slice subnet management function (NSSMF) node in a wireless communication system may include receiving a request message including a tracking area code (TAC) list for network slice generation from a network slice management function (NSMF) node, wherein the TAC list corresponds to information on a specific area related to network slice generation, determining at least one TAC corresponding to a TAC supported by the NSSMF node from among TACs included in the TAC list, and transmitting, to the NSMF node, a response message including information on the determined at least one TAC.

According to an embodiment, the determining of the at least one TAC corresponding to the TAC supported by the NSSMF node from among the TACs included in the TAC list may include identifying the at least one TAC among the TACs included in the TAC list and a difference between values according to the codes of the at least one TAC and the TAC supported by the NSSMF node does not exceed a threshold value.

According to an embodiment, the method may further include storing information about the TACs included in the TAC list.

According to an embodiment, the method may further include identifying that some of the TACs supported by the NSSMF node have been added or cancelled, further determining one or more TACs corresponding to the added or cancelled TACs among the stored TACs, and transmitting a response notification message including information about the identified one or more TACs to the NSMF node.

According to an embodiment, the NSSMF node may be at least one of a radio access network (RAN) NSSMF node, a core NSSMF node, or a transport NSSMF node.

According to various embodiments of the disclosure, a method performed by a network slice management function (NSMF) node in a wireless communication system may include transmitting a request message including a tracking area code (TAC) list for network slice generation to a network slice management function (NSMF) node, wherein the TAC list corresponds to information on a specific area related to the network slice generation, receiving, from the NSSMF, a response message including information on at least one TAC corresponding to a TAC supported by the NSSMF node among TACs included in the TAC list, and generating a network slice based on information on the at least one TAC.

According to an embodiment, the method may further include receiving information about a service profile including information about a specific area related to the network slice generation from a communication service management function (CSMF) node, and generating a TAC list for the network slice generation, based on the information about the specific area.

According to an embodiment, the method may further include, in case that information about at least one TAC corresponding to a TAC supported by the NSSM node among the TACs included in the TAC list is stored in the NSMF node, transmitting a request message including the information about the at least one TAC to the NSSMF node, and in case that information about at least one TAC corresponding to the TAC supported by the NSSM node among the TACs included in the TAC list is not stored in the NSMF node, transmitting a request message including the TAC list for the network slice generation to the NSSMF node.

According to an embodiment, the method may further include, in case that some of the TACs supported by the NSSMF node have been added or cancelled, receiving, from the NSSMF node, a response notification message including information about one or more TACs determined based on the added or cancelled TACs.

According to an embodiment, the NSSMF node may be at least one of a radio access network (RAN) NSSMF node, a core NSSMF node, or a transport NSSMF node.

According to various embodiments of the disclosure, a network slice subnet management function (NSSMF) node in a wireless communication system may include at least one transceiver, and at least one processor functionally coupled to the at least one transceiver, wherein the at least one processor is configured to receive a request message including a tracking area code (TAC) list for network slice generation from a network slice management function (NSMF) node, wherein the TAC list corresponds to information on a specific area related to network slice generation, determine at least one TAC corresponding to a TAC supported by the NSSMF node from among TACs included in the TAC list, and transmit, to the NSMF node, a response message including information on the determined at least one TAC.

According to an embodiment, the at least one processor may be configured to, in order to determine the at least one TAC corresponding to the TAC supported by the NS SMF node from among the TACs included in the TAC list, identify the at least one TAC among the TACs included in the TAC list and a difference between values according to the codes of the at least one TAC and the TAC supported by the NSSMF node does not exceed a threshold value.

According to an embodiment, the at least one processor may be further configured to store information about the TACs included in the TAC list.

According to an embodiment, the at least one processor may be further configured to identify that some of the TACs supported by the NSSMF node have been added or cancelled, further determine at least one TAC corresponding to the added or cancelled TACs among the stored TACs, and transmit a response notification message including information about the identified one or more TACs to the NSMF node.

According to an embodiment, the NSSMF node may be at least one of a radio access network (RAN) NSSMF node, a core NSSMF node, or a transport NSSMF node.

According to various embodiments of the disclosure, a network slice management function (NSMF) node in a wireless communication system may include at least one transceiver, and at least one processor functionally coupled to the at least one transceiver, wherein the at least one processor is configured to transmit a request message including a tracking area code (TAC) list for network slice generation to a network slice management function (NSMF) node, wherein the TAC list corresponds to information on a specific area related to the network slice generation, receive, from the NSSMF, a response message including information on at least one TAC corresponding to a TAC supported by the NSSMF node among TACs included in the TAC list, and generate a network slice based on information on the at least one TAC.

According to an embodiment, the at least one processor may be further configured to receive information about a service profile including information about a specific area related to the network slice generation from a communication service management function (CSMF) node, and generate a TAC list for the network slice generation, based on the information about the specific area.

According to an embodiment, the at least one processor may be further configured to, in case that information about at least one TAC corresponding to a TAC supported by the NSSM node among the TACs included in the TAC list is stored in the NSMF node, transmit a request message including the information about the at least one TAC to the NSSMF node, and in case that information about at least one TAC corresponding to the TAC supported by the NSSM node among the TACs included in the TAC list is not stored in the NSMF node, transmit a request message including the TAC list for the network slice generation to the NSSMF node.

According to an embodiment, the at least one processor may be further configured to, in case that some of the TACs supported by the NSSMF node have been added or cancelled, receive, from the NSSMF node, a response notification message including information about one or more TACs determined based on the added or cancelled TACs.

According to an embodiment, the NSSMF node may be at least one of a radio access network (RAN) NSSMF node, a core NSSMF node, or a transport NSSMF node.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a network slice subnet management function (NSSMF) node in a wireless communication system, the method comprising:
receiving a request message including a tracking area code (TAC) list for network slice generation from a network slice management function (NSMF) node, wherein the TAC list corresponds to information on a specific area related to network slice generation;
determining at least one TAC corresponding to a TAC supported by the NSSMF node from among TACs included in the TAC list; and
transmitting, to the NSMF node, a response message including information on the determined at least one TAC.

2. The method of claim 1, wherein the determining of the at least one TAC corresponding to the TAC supported by the NSSMF node from among the TACs included in the TAC list comprises identifying the at least one TAC among the TACs included in the TAC list, and a difference between values according to the codes of the at least one TAC and the TAC supported by the NSSMF node does not exceed a threshold value.

3. The method of claim 1, further comprising storing information about the TACs included in the TAC list.

4. The method of claim 3, further comprising:
identifying that some of the TACs supported by the NSSMF node have been added or cancelled;
further determining one or more TACs corresponding to the added or cancelled TACs among the stored TACs; and
transmitting a response notification message including information about the identified one or more TACs to the NSMF node.

5. The method of claim 1, wherein the NSSMF node is at least one of a radio access network (RAN) NSSMF node, a core NSSMF node, or a transport NSSMF node.

6. A method performed by a network slice management function (NSMF) node in a wireless communication system, the method comprising:
transmitting a request message including a tracking area code (TAC) list for network slice generation to a network slice management function (NSMF) node, wherein the TAC list corresponds to information on a specific area related to the network slice generation;
receiving, from the NSSMF, a response message including information on at least one TAC corresponding to a TAC supported by the NSSMF node among TACs included in the TAC list; and
generating a network slice based on information on the at least one TAC.

7. The method of claim 6, further comprising:
receiving information about a service profile including information about a specific area related to the network slice generation from a communication service management function (CSMF) node; and
generating a TAC list for the network slice generation, based on the information about the specific area.

8. The method of claim 6, further comprising:
in case that information about at least one TAC corresponding to a TAC supported by the NSSM node among the TACs included in the TAC list is stored in the NSMF node, transmitting a request message including the information about the at least one TAC to the NSSMF node; and
in case that information about at least one TAC corresponding to the TAC supported by the NSSM node among the TACs included in the TAC list is not stored in the NSMF node, transmitting a request message including the TAC list for the network slice generation to the NSSMF node.

9. The method of claim 6, further comprising, in case that some of the TACs supported by the NSSMF node have been added or cancelled, receiving, from the NSSMF node, a response notification message including information about one or more TACs determined based on the added or cancelled TACs.

10. The method of claim 6, wherein the NSSMF node is at least one of a radio access network (RAN) NSSMF node, a core NSSMF node, or a transport NSSMF node.

11. A network slice subnet management function (NSSMF) node in a wireless communication system, the NSSMF node comprising:
at least one transceiver; and
at least one processor functionally coupled to the at least one transceiver,
wherein the at least one processor is configured to:
receive a request message including a tracking area code (TAC) list for network slice generation from a network slice management function (NSMF) node, wherein the TAC list corresponds to information on a specific area related to network slice generation;
determine at least one TAC corresponding to a TAC supported by the NSSMF node from among TACs included in the TAC list; and
transmit, to the NSMF node, a response message including information on the determined at least one TAC.

12. The NSSMF node of claim 11, wherein the at least one processor is configured to, in order to determine the at least one TAC corresponding to the TAC supported by the NSSMF node from among the TACs included in the TAC list, identify the at least one TAC among the TACs included in the TAC list and a difference between values according to the codes of the at least one TAC and the TAC supported by the NSSMF node does not exceed a threshold value.

13. The NSSMF node of claim 11, wherein the at least one processor is further configured to store information about the TACs included in the TAC list.

14. The NSSMF node of claim 13, wherein the at least one processor is further configured to:
identify that some of the TACs supported by the NSSMF node have been added or cancelled;
further determine at least one TAC corresponding to the added or cancelled TACs among the stored TACs; and
transmit a response notification message including information about the identified one or more TACs to the NSMF node.

15. The NSSMF node of claim 11, wherein the NSSMF node is at least one of a radio access network (RAN) NSSMF node, a core NSSMF node, or a transport NSSMF node.
